# EUROPÄISCHE PATENTSCHRIFT

(11) **EP 1 295 771 B1**
(45) Veröffentlichungstag und Bekanntmachung des Hinweises auf die Patenterteilung: **31.05.2006**
(21) Anmeldenummer: 02102265.2
(22) Anmeldetag: 02.09.2002
(51) Int. Cl.: B60T 13/72, F02D 33/02, F02D 41/30, F02D 41/34, F02D 41/02

(54) **Verfahren zur Steuerung des Drucks in einer Unterdruckkammer eines Unterdruck-Bremskraftverstärkers**
Method for controlling the pressure in a vacuum brake booster
Procédé de commande de la pression d'un servofrein à vide

(30) Priorität: 11.09.2001 DE 10144670
(43) Veröffentlichungstag der Anmeldung: 26.03.2003
(73) Patentinhaber: SIEMENS AKTIENGESELLSCHAFT, 80333 München (DE)
(72) Erfinder: Weiss ,Frank, 93080 Pentling, Grasslfing (DE); Zhang, Hong, 93105 Tegernheim (DE)

(56) Entgegenhaltungen:
- EP-A- 0 833 044
- EP-A- 0 962 371
- EP-A- 1 065 117
- EP-A- 1 114 925
- EP-A- 1 114 926
- US-A- 6 017 100

## Beschreibung

Die Erfindung betrifft ein Verfahren zur Steuerung des Unterdrucks in einer Unterdruckkammer eines Unterdruck-Bremskraftverstärkers.

Bei einem Unterdruck-Bremskraftverstärker wird pedalkraftabhängig eine Arbeitsmembranfläche auf Ihrer Pedalseite mit Außenluftdruck beaufschlagt. An der gegenüberliegenden Seite der Membran liegt ein Unterdruck an. Die aus der Druckdifferenz resultierende Kraft auf die Arbeitsmembran bewirkt eine Hilfskraft, die die von dem Fuß aufgebrachte Pedalkraft unterstützt. Der Bremsdruck resultiert aus Pedal- und Hilfskraft. Der Hilfskraftanteil nimmt dabei entsprechend dem konstruktiv festgelegten Verstärkungsfaktor bis zu einem Ansteuerpunkt stetig zu. Im Ansteuerpunkt ist die maximale Druckdifferenz Außenluftdruck/Unterdruck erreicht.

Um in der Unterdruckkammer des Unterdruck-Bremskraftverstärkers den gewünschten Druck einzustellen, ist die Unterdruckkammer über einen Verbindungsleiter mit einem Ansaugtrakt einer Brennkraftmaschine stromabwärts von einer Drosselklappe verbunden. Die Unterdruckkammer wird evakuiert, indem die Luftströmung durch die Drosselklappe reduziert wird, d.h. es wird angedrosselt, wodurch sich ein niedriger Druck stromabwärts von der Drosselklappe einstellt. Über eine Verbindungsleitung bewirkt der niedrige Druck stromabwärts von der Drosselklappe eine Evakuierung der Unterdruckkammer. Um nach erfolgter Evakuierung ein Zurückströmen der Luft in die Druckkammer zu verhindern, ist die Verbindungsleitung mit einem Rückschlagventil versehen, das ein Zurückströmen der Luft sperrt.

Bei einem zu geringen Unterdruck in der Unterdruckkammer kann eine ausreichende Bremsunterstützung für den Fahrer nicht mehr erfolgen. Dieses Problem tritt vor allem im geschichteten und homogen-mageren Betrieb von Otto-Motoren mit Benzindirekteinspritzung auf. Bei diesem Betrieb ist der Luftanteil in dem Zylinder sehr hoch, so dass auch stromabwärts von der Drosselklappe für viele Fahrsituationen kein ausreichend niedriger Druck herrscht.

Aus EP 0 833 044 A2 ist ein Unterdruck-Bremskraftverstärker bekannt, der über eine Verbindungsleitung mit dem Ansaugtrakt einer Brennkraftmaschine verbunden ist. Die Verbindungsleitung ist mit einem Drucksensor und einem Rückschlagventil versehen. Der Drucksensor fühlt den in der Unterdruckkammer herrschenden Druck und leitet den gemessenen Wert an eine Motorsteuerung weiter. Überschreitet im geschichteten Betrieb der gefühlte Druckwert in der Unterdruckkammer einen vorbestimmten Schwellenwert, so wird die Öffnung des Drosselventils reduziert, wodurch ein geringerer Saugrohrdruck erzeugt und damit die Unterdruckkammer evakuiert wird.

Nachteilig an dem bekannten Verfahren ist, dass die Brennkraftmaschine für eine lange Zeit in dem homogenen Betrieb verbleiben kann, wodurch der Verbrauch an Kraftstoff erhöht wird.

Der Erfindung liegt die Aufgabe zugrunde, ein Verfahren zur Steuerung des Drucks in einer Unterdruckkammer zu schaffen, das bei einem möglichst geringen Kraftstoffverbrauch einen ausreichend niedrigen Druck in der Unterdruckkammer erzeugt.

Erfindungsgemäß wird die Aufgabe durch ein Verfahren mit den Verfahrensschritten aus Anspruch 1 gelöst.

Bei dem erfindungsgemäßen Verfahren fühlt ein mit der Unterdruckkammer verbundener Drucksensor den Druck und leitet den Wert an eine Motorsteuerung weiter. Die Motorsteuerung bestimmt abhängig vom jeweiligen Betriebsmodus einen Wert für einen Saugrohrdruck, der für ein bestimmtes Luft-Kraftstoffgemisch erzielt werden kann. Die Motorsteuerung drosselt die Luftzufuhr entsprechend dem Luft-Kraftstoffgemisch, wenn der dadurch erzielbare Saugrohrdruck niedriger als der gefühlte Druck in der Unterdruckkammer ist. Ein Unterschied zu dem bekannten Verfahren besteht darin, dass ein Luft-Kraftstoffgemisch dann durch die Motorsteuerung neu eingestellt wird, wenn der so erzielbare Saugrohrdruck niedriger als der gefühlte Druck in der Unterdruckkammer ist. Es unterbleibt also, dass die Motorsteuerung beispielsweise in den homogenen Betriebsmodus umschaltet, obwohl der dadurch erzielbare Saugrohrdruck nicht ausreicht, um die Unterdruckkammer zu evakuieren. Bei dem erfindungsgemäßen Verfahren erfolgt jedoch nur dann ein Umschalten des Luft-Kraftstoffgemisches, wenn durch dieses auch die Unterdruckkammer wirkungsvoll evakuiert werden kann. Vorzugsweise erfolgt bei einer Umstellung des Luft-Kraftstoffgemisches eine Umschaltung in den homogenen Betrieb. Mit dem erfindungsgemäßen Verfahren wird die Zeitdauer, in der ein homogener Betrieb der Brennkraftmaschine erfolgt, verkürzt relativ zu dem bekannten Verfahren, da ein Umschalten in den homogenen Betrieb nur erfolgt, wenn durch dieses auch eine Evakuierung erzielt werden kann.

Um den durch eine Androsselung erzielbaren Saugrohrdruck zuverlässig bestimmen zu können, wird im geschichteten oder homogen-mageren Betrieb über ein Kennfeld der minimale Saugrohrdruck für den jeweiligen Betrieb, also für den geschichteten und/oder homogen-mageren Betrieb, bestimmt.

Ebenfalls kann die Motorsteuerung den erzielbaren Saugrohrdruck im geschichteten oder homogen-mageren Betrieb für den homogenen Betrieb bestimmen, indem ein modellbasierter Saugrohrdruck oder ein aus dem vorhandenen Messgrößen berechneter Saugrohrdruck bestimmt wird. Bei der Verwendung von vorhandenen Messgrößen können die Messgrößen wie beispielsweise der geschichtete Saugrohrdruck, Lambda-Werte und die Abgasrückführungsrate verwendet werden. Bei einer modellbasierten Bestimmung des Saugrohrdrucks kann dieser Wert aus einem Drehmomentmodell der Motorsteuerung ermittelt werden.

Um den erzielbaren Saugrohrdruck nicht fortlaufend von der Motorsteuerung bestimmen zu müssen, kann vorgesehen werden, dass der erzielbare Saugrohrdruck nur dann durch die Motorsteuerung bestimmt wird, wenn der Druck in der Unterdruckkammer einen Grenzwert unterschreitet. Mit dem Unterschreiten dieses Grenzwertes wird in der Motorsteuerung ein Signal gesetzt, dass der erzielbare Saugrohrdruck bestimmt und überwacht werden soll.

Der Grenzwert, ab dem die Bestimmung des erzielbaren Saugrohrdrucks einsetzt, kann in einer Ausgestaltung als ein konstanter Schwellenwert gesetzt werden. Auch ist es möglich, dass der Grenzwert abhängig von weiteren Druckwerten, die die Wirkung des Unterdruck-Bremskraftverstärkers beeinflussen, bestimmt wird. Solche die Wirkung des Unterdruck-Bremskraftverstärkers beeinflussende Druckwerte sind insbesondere der Druck in der Unterdruckkammer und/oder der Umgebungsdruck.

In einer bevorzugten Ausgestaltung schaltet die Motorsteuerung den Betriebsmodus in den homogenen, vorzugsweise homogen-stöchiometrischen Betrieb um, wenn die Unterdruckkammer evakuiert werden soll. Bei dieser Ausgestaltung des Verfahrens ist es so, dass als der erzielbare Saugrohrdruck stets der Saugrohrdruck im homogenen Betrieb angesetzt werden kann.

Bei einer Weiterführung des erfindungsgemäßen Verfahrens schaltet die Motorsteuerung aus dem homogenen Betrieb in den ursprünglichen Betriebsmodus zurück, wenn der Saugrohrdruck größer oder gleich dem Druck in der Unterdruckkammer ist. Mit dieser Ausgestaltungen des Verfahrens wird der homogene Betrieb der Brennkraftmaschine nur solange eingesetzt, wie es zur Evakuierung der Druckkammer erforderlich ist. Sobald der in der Druckkammer gefühlte Wert dem Wert in dem Saugrohrdruck entspricht, wird wieder in den ursprünglichen Betriebsmodus zurückgeschaltet. Sofern die Motorsteuerung zwischenzeitlich aufgrund der Fahrbedingungen bereits einen anderen Betriebsmodus mit einem entsprechenden anderen Luft-Kraftstoffverhältnis ermittelt hat, kann auch direkt in diesen Betriebsmodus umgeschaltet werden.

Da die Unterdruckkammer insbesondere beim geschichteten und homogen-mageren Betrieb nicht ausreichend mit einem Unterdruck beaufschlagt ist, erweist es sich als vorteilhaft, die Bestimmung des erzielbaren Druckwerts nur in diesen Betriebsmodi durch die Motorsteuerung vornehmen zu lassen.

Eine vorteilhafte Ausgestaltung des erfindungsgemäßen Verfahrens wird anhand der nachfolgenden Zeichnung näher beschrieben. Es zeigt:
- Fig. 1: eine schematische Ansicht eines Unterdruck-Bremskraftverstärkers, dessen Unterdruckkammer mit dem Ansaugtrakt verbunden ist, und
- Fig. 2: den beispielhaften Verlauf des Saugrohrdrucks und der entsprechenden Luft-Kraftstoffverhältnisse bei dem erfindungsgemäßen Verfahren.

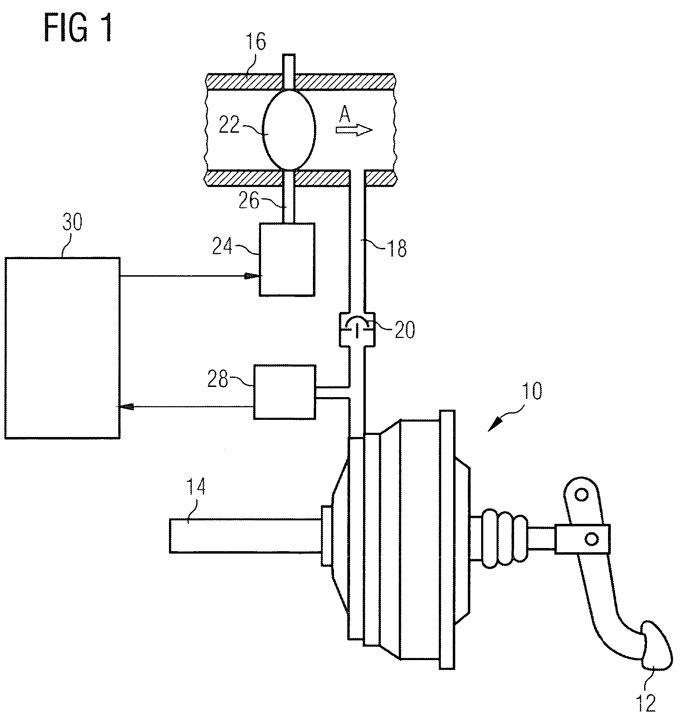

Fig. 1 zeigt einen Unterdruck-Bremskraftverstärker 10. Der Bremskraftverstärker 10 ist an einer Seite mit einem Bremspedal 12 gekoppelt. Die gegenüberliegende Seite ist mit einer Druckstange 14 versehen, die schematisch dargestellt ist. An die mit Unterdruck beaufschlagte Druckkammer (nicht dargestellt) des Bremskraftverstärkers 10 ist mit dem Ansaugtrakt 16 der Brennkraftmaschine verbunden. Die Verbindung erfolgt über eine Verbindungsleitung 18, die mit einem Rückschlagventil 20 versehen ist.

Die Strömungsrichtung der Luft in dem Ansaugrohr 16 ist durch den Pfeil A dargestellt. Stromaufwärts von der Mündung der Verbindungsleitung 18 in den Ansaugtrakt ist eine Drosselklappe 22 vorgesehen. Die Drosselklappe 22 ist drehbar auf einer Welle 26 gehalten. Die Welle 26 ist mit einem Elektromotor 24 verbunden, der mit dieser die Stellung der Drosselklappe einstellt.

Auf der zu dem Bremskraftverstärker 10 weisenden Seite der Verbindungsleitung 18 ist ein Drucksensor 28 vorgesehen, der den Druck in der Unterdruckkammer fühlt.

Der gefühlte Druckwert wird an eine Motorsteuerung 30 weitergeleitet. Neben der herkömmlichen Steuerung der Drosselklappe 22 über den Elektromotor 24 führt die Motorsteuerung 30 auch das erfindungsgemäße Verfahren durch.

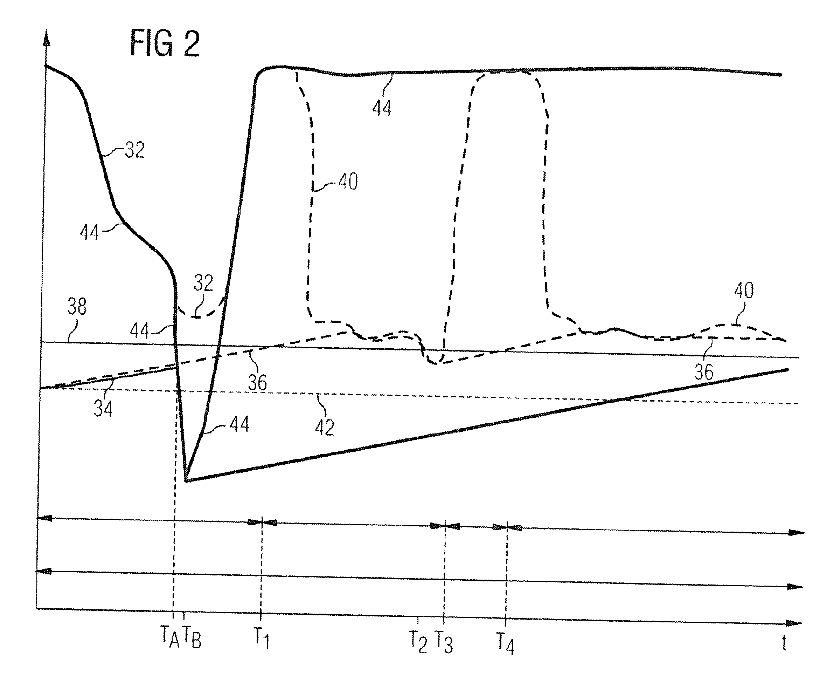

Das erfindungsgemäße Verfahren wird nachfolgend anhand von Fig. 2 näher beschrieben, die verschiedene Druckwerte als Funktion der Zeit zeigt. Kurve 32 zeigt den Druckverlauf in dem Saugrohr. Der Saugrohrdruck kann hierbei modellbasiert mit Hilfe der Motorsteuerung 30 bestimmt sein oder aus vorhandenen Messgrößen berechnet werden. Ebenfalls dargestellt ist der Druckverlauf 34 in der Unterdruckkammer des Bremskraftverstärkers 10. Der Druck in dem Bremskraftverstärker 10 steigt in einem ersten Abschnitt von Fig. 2 an, so dass die Druckdifferenz zur Umgebungsluft kleiner wird. Mithin lässt die Bremskraftunterstützung nach.

Ein beispielhafter Verlauf für den Druck in der Unterdruckkammer bei einem herkömmlichen Verfahren, insbesondere nach EP 0 833 044 A1, ist durch die gestrichelte Linie 36 dargestellt. Der Druckwert 36 in der Unterdruckkammer steigt an, bis er einen Grenzwert 38 zum Zeitpunkt T₁ überschreitet. Im Zeitpunkt T₁ schaltet die Motorsteuerung 30 auf den homogenen Motorbetrieb um. Hierauf ansprechend fällt der Saugrohrdruck 40 nachfolgend ab. Deutlich sichtbar in Fig. 2 ist, dass der Saugrohrdruck 40 zunächst oberhalb des Grenzwertes 38 liegt, so dass keine Evakuierung der Unterdruckkammer erfolgt. Vielmehr steigt der Druck 36 in der Unterdruckkammer weiter an. Erst im Zeitpunkt T₂ fällt der Druck im Ansaugtrakt 40 unter den Grenzwert 38, so dass nachfolgend eine Evakuierung der Unterdruckkammer erfolgt.

Nach der Evakuierung wird zum Zeitpunkt T₃ erneut in den Schichtbetrieb geschaltet, woraufhin der Druck im Ansaugrohr erneut ansteigt. Aufgrund der Fahrsituation steigt der Druck 36 in der Unterdruckkammer im Zeitpunkt T₄ erneut über den Grenzwert 38. Hierauf schaltet die Motorsteuerung wieder in den homogenen Betriebsmodus um. Der Druck in dem Saugrohr fällt und nach einer bestimmten Druckausgleichzeit folgt der Druck in der Unterdruckkammer dem fallenden Saugrohrdruck und bleibt bei steigendem Saugrohrdruck etwa konstant.

Bei der erfindungsgemäßen Lösung wird dagegen festgestellt, dass der Saugrohrdruck 44 im Zeitpunkt T_{A} unter den Druckwert in der Unterdruckkammer fallen würde, wenn in den homogenen Betrieb umgeschaltet wird. Daraufhin wird im Zeitpunkt T_{A} in den homogenen Betrieb umgeschaltet, so dass nachfolgend der Saugrohrdruck 44 abfällt. Bevorzugt schaltet die Motorsteuerung 30 wieder in den geschichteten Betrieb zum Zeitpunkt T_{B} zurück, an dem der Saugrohrdruck 44 erneut ansteigt. Der Zeitpunkt für das Zurückschalten in den geschichteten Betriebsmodus erfolgt, wenn der Saugrohrdruck 44 wieder größer als der Druck in der Unterdruckkammer ist. Wie aus Fig. 2 deutlich ersichtlich, wird der Druck in der Unterdruckkammer in dem Zeitabschnitt T_{A} bis T_{B} soweit gesenkt, dass nachfolgend die Brennkraftmaschine im geschichteten Betrieb arbeiten kann. Demgegenüber lässt das bekannte Verfahren den Zeitabschnitt T_{A} bis T_{B}, in dem der Saugrohrdruck sehr niedrig ist, ungenutzt verstreichen und schaltet erst in den homogenen Betrieb, wenn der Saugrohrdruck vergleichsweise groß ist. Hierdurch werden die insgesamt auftretenden Phasen des homogenen Betriebs verlängert und somit der Kraftstoffverbrauch erhöht.

Fig. 2 zeigt ferner einen Schwellenwert 42. Bei Überschreiten des Schwellenwertes 42 setzt eine Überwachung ein, ob der erzielbare Saugrohrdruck niedriger als der Druck in der Unterdruckkammer ausfallen kann. Der Schwellenwert 42 liegt in dem dargestellten Ausführungsbeispiel niedriger als der Grenzwert 38, beispielsweise kann der Grenzwert 38 400mbar betragen, während der Schwellenwert 42 350mbar beträgt.

## Patentansprüche

1. Verfahren zur Steuerung des Drucks in einer Unterdruckkammer eines Unterdruck-Bremskraftverstärkers, die über eine Verbindungsleitung mit einem Ansaugtrakt einer Brennkraftmaschine stromabwärts von einer Drosselklappe verbunden ist,
**gekennzeichnet durch** die folgenden Verfahrensschritte:
- ein Drucksensor (28) fühlt den Druck in der Unterdruckkammer und leitet den Wert an eine Motorsteuerung (30) weiter,
- die Motorsteuerung (30) bestimmt einen Saugrohrdruck, der für ein Luft-Kraftstoffgemisch erzielt werden kann, und
- die Motorsteuerung drosselt die Luftzufuhr entsprechend dem Luft-Kraftstoffgemisch, wenn der **dadurch** erzielbare Saugrohrdruckwert niedriger als der gefühlte Druck in der Unterdruckkammer ist.

2. Verfahren nach Anspruch 1,
**dadurch gekennzeichnet, dass** der erzielbare Saugrohrdruck über ein Kennfeld bestimmt wird, das den minimalen Saugrohrdruck für den jeweiligen Betriebsmodus enthält, insbesondere für den geschichteten und den homogen-mageren Betrieb.

3. Verfahren nach Anspruch 1 oder 2,
**dadurch gekennzeichnet, dass** bei einem geschichteten oder homogen-mageren Betrieb der erzielbare Saugrohrdruck für den homogenen Betrieb ein modellbasierter Saugrohrdruck oder ein aus den vorhandenen Messgrößen berechneter Saugrohrdruck bestimmt wird.

4. Verfahren nach einem der Ansprüche 1 bis 3,
**dadurch gekennzeichnet, dass** die Motorsteuerung den erzielbaren Saugrohrdruck nur bestimmt, wenn der Druck in der Unterdruckkammer einen Grenzwert (42) überschreitet.

5. Verfahren nach einem der Ansprüche 1 bis 4,
**dadurch gekennzeichnet, dass** der Grenzwert (42) ein konstanter Schwellwert ist.

6. Verfahren nach Anspruch 4,
**dadurch gekennzeichnet, dass** der Grenzwert (42) abhängt von weiteren Druckwerten, die die Kraftverstärkung durch den Unterdruck-Bremskraftverstärker beeinflussen, insbesondere von dem Druck in der Unterdruckkammer und/oder den Umgebungsdruck.

7. Verfahren nach einem der Ansprüche 1 bis 6,
**dadurch gekennzeichnet, dass** die Motorsteuerung (30) die Luftzufuhr drosselt zu einem Luftkraftstoffgemisch, das einem homogenen Betriebsmodus entspricht.

8. Verfahren nach Anspruch 7,
**dadurch gekennzeichnet, dass** die Motorsteuerung (30) aus einem homogenen Betriebsmodus in den ursprünglichen Betriebsmodus zurückschaltet, wenn der Saugrohrdruck größer oder gleich dem Druck in der Unterdruckkammer ist.

9. Verfahren nach einem der Ansprüche 1 bis 8,
**dadurch gekennzeichnet, dass** die Motorsteuerung die Bestimmung des erzielbaren Saugrohrdruck im geschichteten oder im homogen-mageren Betrieb vornimmt.

## Claims

1. Method for controlling the pressure in a vacuum chamber of a vacuum brake booster, which is connected to an induction manifold in a internal combustion engine, downstream of a throttle valve, via a connecting line, **characterised by** the following method steps;
- a pressure sensor (28) senses the pressure in the vacuum chamber and forwards the value to an engine management system (30),
- the engine management system (30) determines an induction manifold pressure, which can be achieved for an air-fuel mixture, and
- the engine management system throttles the air supply according to the air-fuel mixture, if the induction manifold pressure value achievable by this method is lower than the sensed pressure in the vacuum chamber.

2. Method according to claim 1,
**characterised in that**
the achievable induction manifold pressure is determined via engine characteristics, which contain the minimal induction manifold pressure for the respective operating mode, in particular for layered and homogenous-lean operation.

3. Method according to claim 1 or 2,
**characterised in that**
with a layered or homogenous-lean operation of the achievable induction manifold pressure for homogenous operation, a model-based induction manifold pressure or an induction manifold pressure calculated from the present measurement categories is determined.

4. Method according to one of claims 1 to 3,
**characterised in that**
the engine management system only determines the achievable induction manifold pressure if the pressure in the vacuum chamber exceeds a limit value (42).

5. Method according to one of the claims 1 to 4,
**characterised in that**
the limit value (42) is a constant threshold value.

6. Method according to claim 4,
**characterised in that**
the limit value (42) depends on further pressure values, which influence the power amplification by the vacuum brake booster, in particular on the pressure in the vacuum chamber and/or the ambient pressure.

7. Method according to one of the claims 1 to 6
**characterised in that**
the engine management system (3) throttles the air supply for an air-fuel mixture, which corresponds to a homogenous operating mode.

8. Method according to claim 7,
**characterised in that**
the engine management system (30) switches back from a homogenous operating mode into the original operating mode, if the induction manifold pressure is greater than or equal to the pressure in the vacuum pressure chamber.

9. Method according to one of the claims 1 to 8,
**characterised in that**
the engine management system determines the achievable induction manifold pressure in layered or in homogenous-lean operation.

## Revendications

1. Procédé de commande de la pression régnant dans une chambre de dépression d'un amplificateur de force de freinage à dépression qui est reliée par une conduite de liaison à une tubulure d'admission d'un moteur à combustion interne, en aval d'un volet de réglage,
**caractérisé par** les étapes de procédé suivantes :
- un capteur de pression (28) détecte la pression dans la chambre de dépression et transmet la valeur à une commande de moteur (30),
- la commande de moteur (30) détermine une pression de tubulure d'admission qui peut être atteinte pour un mélange air-carburant et
- la commande de moteur étrangle l'arrivée d'air en fonction du mélange air-carburant lorsque la valeur de pression de tubulure d'admission qui peut atteinte par cette action est plus basse que la pression détectée dans la chambre de dépression.

2. Procédé selon la revendication 1,
**caractérisé en ce que** la pression de tubulure d'admission qui peut être atteinte est déterminée au moyen d'un diagramme caractéristique qui contient la pression de tubulure d'admission minimale pour le mode de fonctionnement actuel, en particulier pour le fonctionnement stratifié et le fonctionnement homogène-pauvre.

3. Procédé selon la revendication 1 ou 2,
**caractérisé en ce que**, dans un fonctionnement stratifié ou homogène-pauvre, la pression de tubulure d'admission pouvant être atteinte pour le fonctionnement homogène est déterminée une pression de tubulure d'admission basée sur modèle ou une pression de tubulure d'admission calculée à partir des grandeurs mesurées disponibles.

4. Procédé selon une des revendications 1 à 3,
**caractérisé en ce que** la commande de moteur ne détermine la pression de tubulure d'admission pouvant être atteinte que lorsque la pression dans la chambre de dépression devient supérieure à une valeur limite (42).

5. Procédé selon une des revendications 1 à 4,
**caractérisé en ce que** la valeur limite (42) est une valeur de seuil constante.

6. Procédé selon la revendication 4,
**caractérisé en ce que** la valeur limite (42) dépend d'autres valeurs de pression qui influent sur l'amplification de force réalisée par l'amplificateur de force de freinage à dépression, en particulier de la pression régnant la chambre de dépression et/ou de la pression ambiante.

7. Procédé selon une des revendications 1 à 6,
**caractérisé en ce que** la commande de moteur (30) étrangle l'arrivée d'air jusqu'à obtenir un mélange air-carburant qui correspond au mode de fonctionnement homogène.

8. Procédé selon la revendication 7,
**caractérisé en ce que** la commande de moteur (30) rebascule d'un mode de fonctionnement homogène au mode de fonctionnement initial lorsque la pression de tubulure d'admission est supérieure ou égale à la pression régnant dans la chambre de dépression.

9. Procédé selon une des revendications 1 à 8,
**caractérisé en ce que** la commande de moteur effectue la détermination de la pression de tubulure d'admission pouvant être atteinte dans le fonctionnement stratifié ou dans le fonctionnement homogène-pauvre.
